Europäisches Patentamt

**(19)** European Patent Office

Office européen des brevets

**(11)** **EP 0 566 680 B1**

**(12)** # EUROPEAN PATENT SPECIFICATION

**(45)** Date of publication and mention
of the grant of the patent:
**29.04.1998 Bulletin 1998/18**

**(21)** Application number: **92904552.4**

**(22)** Date of filing: **10.01.1992**

**(51)** Int. Cl.$^6$: **B01J 21/16**, B01J 29/04,
B01J 29/03

**(86)** International application number:
**PCT/US92/00095**

**(87)** International publication number:
**WO 92/11934 (23.07.1992 Gazette 1992/19)**

**(54) LAYERED OXIDE MATERIALS AND SWOLLEN AND PILLARED FORMS THEREOF**

SCHICHTENFÖRMIGE OXIDE SOWIE GESCHWOLLENE UND SAEULENARTIGE FORMEN
DIESER MATERIALIEN

MATERIAUX OXYDES STRATIFIES ET FORMES GONFLEES ET EN COLONNES DE CES
MATERIAUX

**(84)** Designated Contracting States:
**AT BE DE DK ES FR GB IT NL SE**

**(30)** Priority: **11.01.1991 US 640330**
**11.01.1991 US 640340**
**20.12.1991 US 811360**

**(43)** Date of publication of application:
**27.10.1993 Bulletin 1993/43**

**(73)** Proprietor:
**MOBIL OIL CORPORATION**
**Fairfax, Virginia 22037-0001 (US)**

**(72)** Inventors:
• **KRESGE, Charles, Theodore**
**West Chester, PA 19380 (US)**

• **ROTH, Wieslaw, Jerzy**
**Sewell, NJ 08080 (US)**
• **SIMMONS, Kenneth, Gregory**
**Williamstown, NJ 08094-1464 (US)**
• **VARTULI, James, Clarke**
**West Chester, PA 19380 (US)**

**(74)** Representative: **Kador & Partner**
**Corneliusstrasse 15**
**80469 München (DE)**

**(56)** References cited:
| | |
|---|---|
| **EP-A- 0 163 560** | **EP-A- 0 266 825** |
| **WO-A-91/12204** | **US-A- 4 176 090** |
| **US-A- 4 248 739** | **US-A- 4 859 648** |
| **US-A- 4 954 325** | |

## Description

This invention relates to layered oxide materials and swollen and pillared forms thereof.

Many layered materials are known which have three-dimensional structures which exhibit their strongest chemical bonding in only two dimensions. In such materials, the stronger chemical bonds are formed in two-dimensional planes and a three-dimensional solid is formed by stacking such planes on top of each other. However, the interactions between the planes are weaker than the chemical bonds holding an individual plane together. The weaker bonds generally arise from interlayer attractions such as Van der Waals forces, electrostatic interactions, and hydrogen bonding. In those situations where the layered structure has electronically neutral sheets interacting with each other solely through Van der Waals forces, a high degree of lubricity is manifested as the planes slide across each other without encountering the energy barriers that arise with strong interlayer bonding. Graphite is an example of such a material. The silicate layers of a number of clay materials are held together by electrostatic attraction mediated by ions located between the layers. In addition, hydrogen bonding interactions can occur directly between complementary sites on adjacent layers, or can be mediated by interlamellar bridging molecules.

Laminated materials such as clays may be modified to increase their surface area. In particular, the distance between the layers can be increased substantially by absorption of various swelling agents such as water, ethylene glycol, amines and ketones, which enter the interlamellar space and push the layers apart. However, the interlamellar spaces of such layered materials tend to collapse when the molecules occupying the space are removed by, for example, exposing the clays to high temperatures. Accordingly, such layered materials having enhanced surface area are not suited for use in chemical processes involving even moderately severe conditions.

The extent of interlayer separation can be estimated by using standard techniques such as X-ray diffraction to determine the basal spacing, also known as "repeat distance" or "d-spacing". These values indicate the distance between, for example, the uppermost margin of one layer with the uppermost margin of its adjoining layer. If the layer thickness is known, the interlayer spacing can be determined by subtracting the layer thickness from the basal spacing.

Various approaches have been taken to provide layered materials of enhanced interlayer distance having thermal stability. Most techniques rely upon the introduction of an inorganic "pillaring" agent between the layers of a layered material. For example, U.S. Patent 4,216,188 discloses a clay which is cross-linked with metal hydroxide prepared from a highly dilute colloidal solution containing fully separated unit layers and a cross-linking agent comprising a colloidal metal hydroxide solution. U.S. Patent 4,248,739 relates to a stable pillared interlayered clay prepared from a smectite clay reacted with a cationic metal complex of a metal such as aluminum and zirconium. The resulting product exhibits high interlayer separation and thermal stability.

U.S. Patent 4,176,090 discloses a clay composition interlayered with polymeric cationic hydroxy metal complexes of metals such as aluminum, zirconium and titanium. Interlayer distances of up to 16A are claimed although only distances restricted to about 9A are exemplified for calcined samples. These distances are essentially unvariable and related to the specific size of the hydroxy metal complex.

Silicon-containing materials are believed to be a highly desirable species of intercalating agents owing to their high thermal stability characteristics. U.S. Patent 4,367,163 describes a clay intercalated with silica by impregnating a clay substrate with a silicon-containing reactant such as an ionic silicon complex, e.g., silicon acetylacetonate, or a neutral species such as $SiCl_4$. The clay may be swelled prior to or during silicon impregnation with a suitable polar solvent such as methylene chloride, acetone, benzaldehyde, tri- or tetraalkylammonium ions, or dimethylsulfoxide. This method, however, appears to provide only a monolayer of intercalated silica resulting in a product of small spacing between layers, about 2-3 A as determined by X-ray diffraction.

U. S. Patent 4,859,648 describes layered oxide products of high thermal stability and surface area which contain interlayer polymeric oxides such as polymeric silica. These products are prepared by ion exchanging a layered metal oxide, such as layered titanium oxide, with organic cation, to spread the layers apart. A compound such as tetraethylorthosilicate, capable of forming a polymeric oxide, is thereafter introduced between the layers. The resulting product is treated to form polymeric oxide, e.g., by hydrolysis, to produce the layered oxide product. The resulting product may be employed as a catalyst material in the conversion of hydrocarbons.

Zeolites, both naturally occurring and synthetic, are crystalline oxides, which unlike layered materials, are ordered and strongly bonded in three directions. Thus the structure of zeolites may be described as containing corner-sharing tetrahedra having a three-dimensional four-connected net with T-atoms at the vertices of the net and O-atoms near the midpoints of the connecting lines. Further characteristics of certain zeolites are described in Collection of Simulated XRD Powder Patterns for Zeolites by Roland von Ballmoos, Butterworth Scientific Limited, 1984.

Synthetic zeolites are often prepared from aqueous reaction mixtures comprising sources of appropriate oxides. Organic directing agents may also be included in the reaction mixture for the purpose of influencing the production of a zeolite having the desired structure. After the components of the reaction mixture are properly mixed with one another, the reaction mixture is subjected to appropriate crystallization conditions, which usually involve heating the reaction mixture to an elevated temperature possibly with stirring. After crystallization of the reaction mixture is complete, the crystalline product may be recovered from the remainder of the reaction mixture, especially the liquid contents thereof. Such recovery may involve filtering the crystals and washing them with water. However, in order to remove all of the undesired residue of the reaction mixture from the crystals, it is often necessary to subject the crystals to a high temperature calcination e.g., at 500°C, possibly in the presence of oxygen. Such a calcination treatment not only removes water from the crystals, but also serves to decompose and/or oxidize the residue of the organic directing agent which may be occluded in the pores of the crystals, possibly occupying ion exchange sites therein.

It has now been discovered that a certain synthetic crystalline zeolite undergoes a transformation during the synthesis thereof from an intermediate swellable layered state to a non-swellable final state having order in three dimensions, the layers being stacked upon one another in an orderly fashion. This transformation may occur during the drying of the recovered crystals, even at moderate temperatures, e.g., 110°C or greater. By interrupting the synthesis prior to final calcination and thereby intercepting the material in its swellable intermediate state, it is possible to interpose a swelling agent between the layers of the material before the material is transformed into a non-swellable state. When the swollen, non-pillared form of the material is calcined, the material may be transformed into product which has disorder in the axis perpendicular to the planes of the layers, due to disordered stacking of the layers upon one another.

Accordingly, the invention resides in a first aspect in a layered oxide material having an X-ray diffraction pattern comprising the following lines:

| d(A) [1nm = 10Å] | $I/I_o$ |
|---|---|
| >32.2 | vs |
| 12.13 - 12.66 | w-s |
| 3.35 - 3.51 | w-s |

In a second aspect, the invention resides in a method of synthesizing the layered oxide material of said first aspect of the invention, said method comprising contacting an as-synthesized zeolite material with an organic swelling agent under conditions to swell said as-synthesized material, wherein said as-synthesized material has an X-ray diffraction pattern comprising the following lines:

| d(A) [1nm = 10Å] | $I/I_o$ |
|---|---|
| $13.53 \pm 0.2$ | m-vs |
| $12.38 \pm 0.2$ | m-vs |
| $11.13 \pm 0.2$ | w-s |
| $9.15 \pm 0.15$ | w-s |
| $6.89 \pm 0.15$ | w-m |
| $4.47 \pm 0.10$ | w-m |
| $3.95 \pm 0.08$ | w-vs |
| $3.56 \pm 0.06$ | w-m |
| $3.43 \pm 0.06$ | m-vs |
| $3.36 \pm 0.05$ | w-s |

In a third aspect, the invention resides in a method for preparing a pillared layered material comprising the steps of:

(i) preparing a reaction mixture capable of forming a layered material upon crystallization, said reaction mixture containing alkali or alkaline earth metal cations, a source of silica containing at least about 30 wt% solid silica, an oxide of aluminum, water and hexamethyleneimine;
(ii) maintaining said reaction mixture under crystallization conditions until crystals of layered material are formed;
(iii)swelling said layered material of step (ii) by contacting said layered material with a swelling agent; and
(iv) contacting the swollen material of step (iii) with a pillaring agent.

The invention will now be more particularly described with reference to the accompanying drawings, in which

Figure 1 is the X-ray diffraction pattern of an as-synthesized form of a layered material which may be swollen and pillared;

Figure 2 is the X-ray diffraction pattern of a swollen form of the material having the X-ray diffraction pattern shown in Figure 1;

Figure 3 is an X-ray diffraction pattern of the pillared form of the layered material having the X-ray diffraction pattern shown in Figure 1; and

Figure 4 is the X-ray diffraction pattern of the calcined form of the swollen material having the X-ray diffraction pattern shown in Figure 2.

The swollen layered oxide material of said first aspect of the invention may be prepared from a precursor material which is crystallized in the presence of, e.g., a hexamethyleneimine directing agent and which, if calcined, without being swollen would be transformed into a zeolite material having an X-ray diffraction pattern as shown in Table 1.

TABLE 1

| Interplanar d-Spacing (A) [1nm = 10Å] | Relative Intensity, $I/I_o$ x 100 |
|---|---|
| 30.0 ± 2.2 | w-m |
| 22.1 ± 1.3 | w |
| 12.36 ± 0.2 | m-vs |
| 11.03 ± 0.2 | m-s |
| 8.83 ± 0.14 | m-vs |
| 6.86 ± 0.14 | w-m |
| 6.18 ± 0.12 | m-vs |
| 6.00 ± 0.10 | w-m |
| 5.54 ± 0.10 | w-m |
| 4.92 ± 0.09 | w |
| 4.64 ± 0.08 | w |
| 4.41 ± 0.08 | w-m |
| 4.25 ± 0.08 | w |
| 4.10 ± 0.07 | w-s |
| 4.06 ± 0.07 | w-s |
| 3.91 ± 0.07 | m-vs |
| 3.75 ± 0.06 | w-m |
| 3.56 ± 0.06 | w-m |
| 3.42 ± 0.06 | vs |
| 3.30 ± 0.05 | w-m |
| 3.20 ± 0.05 | w-m |
| 3.14 ± 0.05 | w-m |
| 3.07 ± 0.05 | w |
| 2.99 ± 0.05 | w |
| 2.82 ± 0.05 | w |
| 2.78 ± 0.05 | w |
| 2.68 ± 0.05 | w |
| 2.59 ± 0.05 | w |

The values in this Table and like tables presented hereinafter were determined by standard techniques. The radiation was the K-alpha doublet of copper and a diffractometer equipped with a scintillation counter and an associated computer was used. The peak heights, I, and the positions as a function of 2 theta, where theta is the Bragg angle, were determined using algorithms on the computer associated with the diffractometer. From these, the relative intensities, 100 $I/I_o$, where $I_o$ is the intensity of the strongest line or peak, and d (obs.) the interplanar spacing in Angstrom Units (A), corresponding to the recorded lines, were determined. In Tables 1-8, the relative intensities are given in terms of the symbols w=weak, m=medium, s=strong and vs=very strong. In terms of intensities, these may be generally designated as follows:

| w = | 0-20 |
|-----|------|
| m = | 20-40 |
| s = | 40-60 |
| vs= | 60-100 |

The material having the X-ray diffraction pattern of Table 1 is known as MCM-22 and is described in U.S. Patent No. 4,954,325. This material can be prepared from a reaction mixture containing sources of alkali or alkaline earth metal (M), e.g., sodium or potassium, cation, an oxide of trivalent element X, e.g., aluminum, an oxide of tetravalent element Y, e.g., silicon, an organic (R) directing agent, and water, said reaction mixture having a composition, in terms of mole ratios of oxides, within the following ranges:

| Reactants | Useful | Preferred |
|-----------|--------|-----------|
| $YO_2/X_2O_3$ | 10-80 | 10-60 |
| $H_2O/YO_2$ | 5-100 | 10-50 |
| $OH^-/YO_2$ | 0.01-1.0 | 0.1-0.5 |
| $M/YO_2$ | 0.01-2.0 | 0.1-1.0 |
| $R/YO_2$ | 0.05-1.0 | 0.1-0.5 |

In the synthesis method for preparing the material having the X-ray diffraction pattern of Table 1, the source of $YO_2$ should comprise predominantly solid $YO_2$, for example at least about 30 wt.% solid $YO_2$ in order to obtain the desired crystal product. Where $YO_2$ is silica, the use of a silica source containing at least about 30 wt.% solid silica, e.g., Ultrasil (a precipitated, spray dried silica containing about 90 wt.% silica) or HiSil (a precipitated hydrated $SiO_2$ containing about 87 wt.% silica, about 6 wt.% free $H_2O$ and about 4.5 wt.% bound $H_2O$ of hydration and having a particle size of about 0.02 micron) favors formation of MCM-22 from the above mixture. If another source of oxide of silicon e.g., Q-Brand (a sodium silicate comprised of about 28.8 wt.% $SiO_2$, 8.9 wt.% $Na_2O$ and 62.3 wt.% $H_2O$) is used, crystallization may yield impurity phases of other crystal structures, e.g., ZSM-12. Preferably, therefore, the $YO_2$, e.g., silica, source contains at least about 30 wt.% solid $YO_2$, e.g., silica, and more preferably at least about 40 wt.% solid $YO_2$, e.g., silica.

Crystallization of the crystalline material having the X-ray diffraction pattern of Table 1 can be carried out at either static or stirred conditions in a suitable reactor vessel, such as for example, polypropylene jars or teflon lined or stainless steel autoclaves. Crystallization is generally conducted at a temperature of 80 to 225°C for a time of 24 hours to 60 days. Thereafter, the crystals are separated from the liquid and recovered.

The organic directing agent for use in synthesizing the present crystalline material from the above reaction mixture is preferably hexamethyleneimine, but other which may be used include 1,4-diazacycloheptane, azacyclooctane, aminocyclohexane, aminocycloheptane, aminocyclopentane, N,N,N-trimethyl-1-adamantanammmonium ions, and N,N,N-trimethyl-2-adamantanammmonium ions. In general, the organic directing agent may be selected from the group consisting of heterocyclic imines, cycloalkyl amines and adamantane quaternary ammonium ions.

Synthesis of crystals may be facilitated by the presence of at least 0.01 percent, e.g., 0.10 percent or 1 percent, seed crystals (based on total weight) of crystalline product.

During synthesis, the crystalline material having the X-ray diffraction pattern of Table 1 passes through an intermediate stage, in which the material has a different X-ray diffraction pattern than that set forth in Table 1. It has been discovered that this intermediate material is swellable with the use of suitable swelling agents such as cetyltrimethylammonium compounds, e.g., cetyltrimethylammonium hydroxide. However, if this intermediate material, either in its as-synthesized or swollen form, is calcined, even under mild conditions, it is found that the material can no longer be swollen with such swelling agent. By way of contrast it is noted that various layered silicates such as magadiite and kenyaite may be swellable with cetyltrimethylammonium compounds both prior to and after mild calcination.

The swollen intermediate material may have relatively high interplanar distance (d-spacing), e.g., greater than 0,6 nm [6 Angstrom], e.g., greater than 1 nm [10 Angstrom] and even exceeding 3 nm [30 Angstrom]. In addition, the swollen material may be converted into a pillared product. The resultant pillared product, particularly where the pillars contain silica, may be capable of being exposed to calcination conditions, e.g., at temperatures of about 450°C for about two or more hours, e.g., four hours, in nitrogen or air, without significant decrease, e.g., less than about 10%, in interlayer distance.

The material having the X-ray diffraction pattern of Table 1, when intercepted in a swellable, intermediate state and prior to final calcination, may have the X-ray diffraction pattern shown in Table 2.

TABLE 2

| d(A) [1nm = 10Å] | $I/I_o$ |
|---|---|
| $13.53 \pm 0.2$ | m-vs |
| $12.38 \pm 0.2$ | m-vs |
| $11.13 \pm 0.2$ | w-s |
| $9.15 \pm 0.15$ | w-s |
| $6.89 \pm 0.15$ | w-m |
| $4.47 \pm 0.10$ | w-m |
| $3.95 \pm 0.08$ | w-vs |
| $3.56 \pm 0.06$ | w-m |
| $3.43 \pm 0.06$ | m-vs |
| $3.36 \pm 0.05$ | w-s |

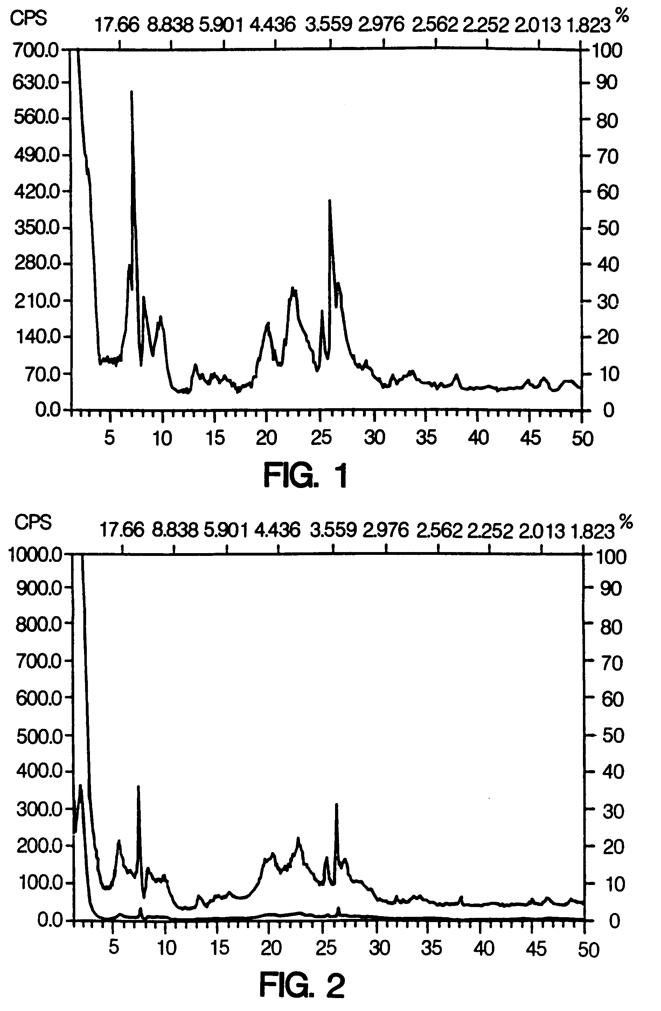

An X-ray diffraction pattern trace for an example of such an as-synthesized, swellable material is shown in Figure 1. A particular example of such an as-synthesized, swellable material is the material of Example 1 of the aforementioned U.S. Patent No. 4,954,325. This material of Example 1 of U.S. Patent No. 4,954,325 has the X-ray diffraction pattern given in the following Table 3.

TABLE 3

| 2 Theta | d(A)[1nm = 10Å] | $I/I_o$ x 100 |
|---|---|---|
| 3.1 | 28.5 | 14 |
| 3.9 | 22.7 | <1 |
| 6.53 | 13.53 | 36 |
| 7.14 | 12.38 | 100 |
| 7.94 | 11.13 | 34 |
| 9.67 | 9.15 | 20 |
| 12.85 | 6.89 | 6 |
| 13.26 | 6.68 | 4 |
| 14.36 | 6.17 | 2 |
| 14.70 | 6.03 | 5 |
| 15.85 | 5.59 | 4 |
| 19.00 | 4.67 | 2 |
| 19.85 | 4.47 | 22 |
| 21.56 | 4.12 | 10 |
| 21.94 | 4.05 | 19 |
| 22.53 | 3.95 | 21 |
| 23.59 | 3.77 | 13 |
| 24.98 | 3.56 | 20 |
| 25.98 | 3.43 | 55 |
| 26.56 | 3.36 | 23 |
| 29.15 | 3.06 | 4 |
| 31.58 | 2.833 | 3 |
| 32.34 | 2.768 | 2 |
| 33.48 | 2.676 | 5 |
| 34.87 | 2.573 | 1 |
| 36.34 | 2.472 | 2 |
| 37.18 | 2.418 | 1 |
| 37.82 | 2.379 | 5 |

Taking into account certain modifications, this swellable material may be swollen and pillared by methods generally discussed in the aforementioned U.S. Patent No. 4,859,648. These modifications are discussed hereinafter and include the selection of proper swelling pH and swelling agent.

Upon being swollen with a suitable swelling agent, such as a cetyltrimethylammonium compound, the swollen material may have the X-ray diffraction pattern shown in Table 4.

TABLE 4

| d(A) [1nm = 10Å] | I/I$_o$ |
|---|---|
| >32.2 | vs |
| 12.41 ± 0.25 | w-s |
| 3.44 ± 0.07 | w-s |

The X-ray diffraction pattern of this swollen material may have additional lines with a d(A) spacing less than the line at 12.41 ± 0.25, but none of said additional lines have an intensity greater than that of the line at the d(A) spacing of 12.41 ± 0.25 or at 3.44 ± 0.07, whichever is more intense. More particularly, the X-ray diffraction pattern of this swollen material may have the lines shown in the following Table 5.

TABLE 5

| d(A) [1nm = 10Å] | I/I$_o$ |
|---|---|
| >32.2 | vs |
| 12.41 ± 0.25 | w-s |
| 11.04 ± 0.22 | w |
| 9.28 ± 0.19 | w |
| 6.92 ± 0.14 | w |
| 4.48 ± 0.09 | w-m |
| 3.96 ± 0.08 | w-m |
| 3.57 ± 0.07 | w-m |
| 3.44 ± 0.07 | w-s |
| 3.35 ± 0.07 | w |

Even further lines may be revealed upon better resolution of the X-ray diffraction pattern. For example, the X-ray diffraction pattern may have additional lines at the following d(A) spacings (intensities given in parentheses): 16.7 ± 4.0 (w-m); 6.11 ± 0.24 (w); 4.05 ± 0.08 (w); and 3.80 ± 0.08 (w).

In the region with d < 9 A, the pattern for the swollen material is essentially like the one given in Table 2 for the unswollen material, but with the possibility of broadening of peaks.

An X-ray diffraction pattern trace for an example of such a swollen material is shown in Figure 2. The upper profile is a 10-fold magnification of the lower profile in Figure 2.

Upon being pillared with a suitable polymeric oxide, such as polymeric silica, the swollen material having the X-ray diffraction pattern shown in Table 4 may be converted into a material having the X-ray diffraction pattern shown in Table 6.

TABLE 6

| d(A) [1nm = 10Å] | I/I$_o$ |
|---|---|
| >32.2 | vs |
| 12.38 ± 0.25 | w-m |
| 3.42 ± 0.07 | w-m |

The X-ray diffraction pattern of this pillared material may have additional lines with a d(A) spacing less than the line at 12.38 ± 0.25, but none of said additional lines have an intensity greater than that of the line at the d(A) spacing of 12.38 ± 0.25 or 3.42 ± 0.07, whichever is more intense. More particularly, the X-ray diffraction pattern of this pillared material may have the lines shown in the following Table 7.

TABLE 7

| d(A) [1nm = 10Å] | I/I$_o$ |
|---|---|
| >32.2 | vs |
| 12.38 ± 0.25 | w-m |
| 10.94 ± 0.22 | w-m |
| 9.01 ± 0.18 | w |
| 6.88 ± 0.14 | w |
| 6.16 ± 0.12 | w-m |
| 3.93 ± 0.08 | w-m |
| 3.55 ± 0.07 | w |
| 3.42 ± 0.07 | w-m |
| 3.33 ± 0.07 | w-m |

Even further lines may be revealed upon better resolution of the X-ray diffraction pattern. For example, the X-ray diffraction pattern may have additional lines at the following d(A) spacings (intensities given in parentheses): 5.59 ± 0.11 (w); 4.42 ± 0.09 (w); 4.11 ± 0.08 (w); 4.04 ± 0.08 (w); and 3.76 ± 0.08 (w).

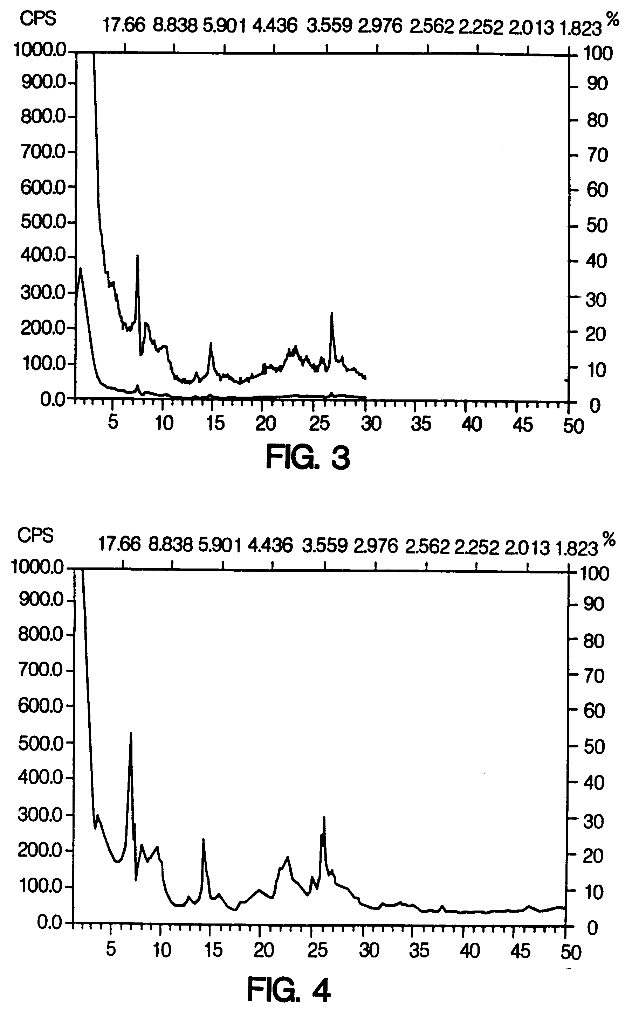

An X-ray diffraction pattern trace for an example of such a pillared material is given in Figure 3. The upper profile is a 10-fold magnification of the lower profile in Figure 3.

If the material swollen with a suitable swelling agent is calcined without prior pillaring another material is produced. For example, if the material which is swollen but not pillared is calcined in air for 6 hours at 540°C, a very strong line at a d(A) spacing of greater than 32.2 will no longer be observed. By way of contrast, when the swollen, pillared material is calcined in air for 6 hours at 540°C, a very strong line at a d(A) spacing of greater than 32.2 will still be observed, although the precise position of the line may shift.

An example of a swollen, non-pillared material, which has been calcined, has the pattern as shown in Table 8.

TABLE 8

| 2 Theta | d(A) [1nm = 10Å] | I/I$_o$ x 100 |
|---|---|---|
| 3.8 | 23.3 | 12 |
| 7.02 | 12.59 | 100 |
| 8.02 | 11.02 | 20 |
| 9.66 | 9.16 | 14 |
| 12.77 | 6.93 | 7 |
| 14.34 | 6.18 | 45 |
| 15.75 | 5.63 | 8 |
| 18.19 | 4.88 | 3 |
| 18.94 | 4.69 | 3 |
| 19.92 | 4.46 | 13 broad |
| 21.52 | 4.13 | 13 shoulder |
| 21.94 | 4.05 | 18 |
| 22.55 | 3.94 | 32 |
| 23.58 | 3.77 | 16 |
| 24.99 | 3.56 | 20 |
| 25.94 | 3.43 | 61 |
| 26.73 | 3.33 | 19 |
| 31.60 | 2.831 | 3 |
| 33.41 | 2.682 | 4 |
| 34.62 | 2.591 | 3 broad |
| 36.36 | 2.471 | 1 |
| 37.81 | 2.379 | 4 |

The X-ray powder pattern shown in Table 8 is similar to that shown in Table 1 except that most of the peaks in Table 8 are much broader than those in Table 1.

An X-ray diffraction pattern trace for an example of the calcined material corresponding to Table 8 is given in Figure 4.

As mentioned previously, the calcined material corresponding to the X-ray diffraction pattern of Table 1 is designated MCM-22. For the purposes of the present disclosure, the pillared material corresponding to the X-ray diffraction pattern of Table 6 is designated herein as MCM-36. The swollen material corresponding to the X-ray diffraction pattern of Table 4 is designated herein as the swollen MCM-22 precursor. The as-synthesized material corresponding to the X-ray diffraction pattern of Table 2 is referred to herein, simply, as the MCM-22 precursor.

The layers of the swollen MCM-22 precursor may have a composition involving the molar relationship:

$$X_2O_3:(n)YO_2,$$

wherein X is a trivalent element, such as aluminum, boron, iron and/or gallium, preferably aluminum, Y is a tetravalent element such as silicon and/or germanium, preferably silicon, and n is at least 5, usually from 10 to 150, more usually from 10 to 60, and even more usually from 10 to 40.

To the extent that the layers of the swollen MCM-22 precursor and MCM-36 have negative charges, these negative charges are balanced with cations. For example, expressed in terms of moles of oxides, the layers of the swollen MCM-22 precursor and MCM-36 may have a ratio of 0.5 to 1.5 $R_2O:X_2O_3$, where R is a monovalent cation or 1/m of a cation of valency m.

The swellable material, used to form the swollen material of the present disclosure, may be initially treated with a swelling agent. Such swelling agents are materials which cause the layers to separate by becoming incorporated into the interspathic region of these layers.

Suitable swelling agents may comprise a source of organic cation, such as quaternary organoammonium or organophosphonium cations, in order to effect an exchange of interspathic cations. Organoammonium cations, such as n-octylammonium, are generally found to be less effective swelling agents than, for example, cetyltrimethylammonium. A pH range of 11 to 14, preferably 12.5 to 13.5 is generally employed during treatment with the swelling agent.

The as-synthesized material is preferably not dried prior to being swollen. This as-synthesized material may be in the form of a wet cake having a solids content of less than 30 % by weight, e.g., 25 wt % or less.

The foregoing swelling treatment results in the formation of a layered oxide of enhanced interlayer separation depending upon the size of the organic cation introduced. In one embodiment, a series of organic cation exchanges can be carried out. For example, an organic cation may be exchanged with an organic cation of greater size, thus increasing the interlayer separation in a step-wise fashion. When contact of the layered oxide with the swelling agent is conducted in aqueous medium, water is trapped between the layers of the swollen species.

The organic-swollen species may be treated with a compound capable of conversion, e.g., by hydrolysis and/or calcination, to pillars of an oxide, preferably to a polymeric oxide. Where the treatment involves hydrolysis, this treatment may be carried out using the water already present in organic-swollen material. In this case, the extent of hydrolysis may be modified by varying the extent to which the organic-swollen species is dried prior to addition of the polymeric oxide precursor.

It is preferred that the organic cation deposited between the layers be capable of being removed from the pillared material without substantial disturbance or removal of the interspathic polymeric oxide. For example, organic cations such as cetyltrimethylammonium may be removed by exposure to elevated temperatures, e.g., calcination, in nitrogen or air, or by chemical oxidation preferably after the interspathic polymeric oxide precursor has been converted to the polymeric oxide pillars in order to form the pillared layered product.

These pillared layered products, especially when calcined, exhibit high surface area, e.g., greater than 500 $m^2/g$, and thermal and hydrothermal stability making them highly useful as catalysts or catalytic supports, for hydrocarbon conversion processes, for example, alkylation.

Insertion of the organic cation between the adjoining layers serves to physically separate the layers in such a way as to make the layered material receptive to the interlayer addition of a polymeric oxide precursor. In particular, cetyltrimethylammonium cations have been found useful. These cations are readily incorporated within the interlayer spaces of the layered oxide serving to prop open the layers in such a way as to allow incorporation of the polymeric oxide precursor. The extent of the interlayer spacing can be controlled by the size of the organoammonium ion employed.

Interspathic oxide pillars, which may be formed between the layers of the propped or swollen oxide material, may include an oxide, preferably a polymeric oxide, of zirconium or titanium or more preferably of an element selected from Group IVB of the Periodic Table (Fischer Scientific Company Cat. No. 5-702-10, 1978), other than carbon, i.e., silicon, germanium, tin and lead. Other suitable oxides include those of Group VA, e.g., V, Nb, and Ta, those of Group IIA, e.g., Mg or those of Group IIIB, e.g., B. Most preferably, the pillars include polymeric silica. In addition, the oxide pillars may include an element which provides catalytically active acid sites in the pillars, preferably aluminum.

The oxide pillars are formed from a precursor material which may be introduced between the layers of the organic "propped" species as an ionic or electrically neutral compound of the desired elements, e.g., those of Group IVB. The precursor material may be an organometallic compound which is a liquid under ambient conditions. In particular, hydrolyzable compounds, e.g., alkoxides, of the desired elements of the pillars may be utilized as the precursors. Suitable polymeric silica precursor materials include tetraalkylsilicates, e.g., tetrapropyl- orthosilicate, tetramethylorthosilicate and, most preferably, tetraethylorthosilicate. Suitable polymeric silica precursor materials also include quaternary ammonium silicates, e.g., tetramethylammonium silicate (i.e. TMA silicate). Where the pillars also include polymeric alumina, a hydrolyzable aluminum compound can be contacted with the organic "propped" species before, after or simultaneously with the contacting of the propped layered oxide with the silicon compound. Preferably, the hydrolyzable aluminum compound employed is an aluminum alkoxide, e.g., aluminum isopropoxide. If the pillars are to include titania, a hydrolyzable titanium compound such as titanium alkoxide, e.g., titanium isopropoxide, may be used.

After calcination to remove the organic propping agent, the final pillared product may contain residual exchangeable cations. Such residual cations in the layered material can be ion exchanged by known methods with other cationic species to provide or alter the catalytic activity of the pillared product. Suitable replacement cations include cesium, cerium, cobalt, nickel, copper, zinc, manganese, platinum, lanthanum, aluminum, ammonium, hydronium and mixtures thereof.

Particular procedures for intercalating layered materials with metal oxide pillars are described in U.S. Patent Nos. 4,831,005; 4,831,006; and 4,929,587. U.S. 4,831,005 describes plural treatments with the pillar precursor. U.S. 4,929,587 describes the use of an inert atmosphere, such as nitrogen, to minimize the formation of extralaminar polymeric oxide during the contact with the pillar precursor. U.S. 4,831,006 describes the use of elevated temperatures during the formation of the pillar precursor.

The resulting pillared products exhibit thermal stability at temperatures of 450°C or even higher as well as substantial sorption capacities (as much as 17 to 40 wt% for $C_6$ hydrocarbon). The pillared products may possess a basal spacing of at least 32.2A and surface areas greater than 500 $m^2$/g.

Adsorption capacities for the pillared material, especially the silica pillared material, of the present invention may range at room temperature as follows:

| Adsorbate | Capacity, Wt. Percent |
|---|---|
| n-hexane | 17-40 |
| cyclohexane | 17-40 |
| water | 10-40 |

wherein cyclohexane and n-hexane sorption are measured at 20 Torr and water sorption is measured at 12 Torr.

The pillared layered materials described herein can optionally be used in intimate combination with a hydrogenating component such as tungsten, vanadium, molybdenum, rhenium, nickel, cobalt, chromium, manganese, or a noble metal such as platinum or palladium where a hydrogenation-dehydrogenation function is to be performed. Such component can be exchanged into the composition, impregnated therein or intimately physically admixed therewith. Such component can be impregnated in, or on, the layered material such as, for example, by, in the case of platinum, treating the layered material with a solution containing a platinum metal-containing ion. Thus, suitable platinum compounds for this purpose include chloroplatinic acid, platinous chloride and various compounds containing the platinum amine complex.

When the swollen layered material described herein is calcined, without first being contacted with a pillaring material or a pillar precursor, the layers collapse and condense upon one another. These collapsed and condensed layers are not swellable and are apparently chemically linked to one another by covalent bonds. However, the layers of the collapsed and condensed swollen materials tend to be stacked upon one another in a disordered fashion. This disordered stacking of layers is consistent with the broadening of peaks as discussed herein with reference to Table 5 in comparison with the sharper peaks of Table 1.

The pillared layered material of the present invention is useful as a sorbent and as a catalyst component for a variety of organic, e.g., hydrocarbon, compound conversion processes. Such conversion processes include cracking hydrocarbons with reaction conditions including a temperature of 300 to 700°C, a pressure of 10 to 3000 kPa (0.1 to 30 atmospheres) and a weight hourly space velocity of 0.1 to 20; dehydrogenating hydrocarbon compounds with reaction conditions including a temperature of 300 to 700°C, a pressure of 10 to 1000 kPa (0.1 to 10 atmospheres) and a weight hourly space velocity of 0.1 to 20; converting paraffins to aromatics with reaction conditions including a temperature of 100°C to 700°C, a pressure of 10 to 6000 kPa (0.1 to 60 atmospheres), a weight hourly space velocity of 0.5 to 400 and a hydrogen/hydrocarbon mole ratio of 0 to 20; converting olefins to aromatics, e.g. benzene, toluene and xylenes, with reaction conditions including a temperature of 100°C to 700°C, a pressure of 10 to 6000kPa (0.1 to 60 atmospheres), a weight hourly space velocity of 0.5 to 400 and a hydrogen/hydrocarbon mole ratio of 0 to 20; converting alcohols, e.g. methanol, or ethers, e.g., dimethylether, or mixtures thereof to hydrocarbons including aromatics with reaction conditions including a temperature of 300°C to 550°C, more preferably 370°C to 500°C, a pressure of from 70 Pa to 14000 kPa (0.01 psi to 2000 psi), more preferably 700 Pa to 3500 kPa (0.1 psi to 500 psi), and a liquid hourly space velocity of 0.5 to 100; isomerizing xylene feedstock components with reaction conditions including a temperature of 230°C to 510°C, a pressure of 300 to 3500 kPa (3 atmospheres to 35 atmospheres), a weight hourly space velocity of 0.1 to 200 and a hydrogen/hydrocarbon mole ratio of 0 to 100; disproportionating toluene with reaction conditions including a temperature of 200°C to 760°C, a pressure of 100 to 6000 kPa (1 to 60 atmospheres) and a weight hourly space velocity of 0.08 to 20; alkylating isoalkanes, e.g. isobutane, with olefins, e.g. 2-butene, with reaction conditions including a temperature of -25°C to 400°C, e.g. 75°C to 200°C, a pressure of from below atmospheric to 35000 kPa (5000 psig), e.g. 100 to 7000 kPa (1 to 1000 psig), a weight hourly space velocity based on olefin of 0.01 to 100, e.g. 0.1 to 20, and a mole ratio of total isoalkane to total olefin of 1:2 to 100:1, e.g. 3:1 to 30:1; alkylating aromatic hydrocarbons, e.g. benzene and alkylbenzenes, in the presence of an alkylating agent, e.g., olefins, formaldehyde, alkyl halides and alcohols, with reaction conditions including a temperature of 340°C to 500°C, a pressure of 100 to 20000 kPa (1 to 200 atmospheres), a weight hourly space velocity of 2 to 2000 and an aromatic hydrocarbon/alkylating agent mole ratio of 1/1 to 20/1; and transalkylating aromatic hydrocarbons in the presence of polyalkylaromatic hydrocarbons with reaction conditions including a temperature of 340°C to 500°C, a pressure of 100 to 20000 kPa (1 to 200 atmospheres), a weight hourly space velocity of 10 to 1000 and an aromatic hydrocarbon/polyalkylaromatic hydrocarbon mole ratio of 1/1 to 16/1.

It may be desirable to incorporate the pillared layered oxide of the present invention with another material which is resistant to the temperatures and other conditions employed in the catalytic processes described herein. Such materials include active and inactive materials and synthetic or naturally occurring zeolites as well as inorganic materials such as clays, silica and/or metal oxides such as alumina. The latter may be either naturally occurring or in the form of gelatinous precipitates or gels including mixtures of silica and metal oxides. Use of a material in conjunction with layered oxide, i.e., combined therewith or present during its synthesis, which itself is catalytically active may change the conversion and/or selectivity of the catalyst. Inactive materials suitably serve as diluents to control the amount of conversion so that products can be obtained economically and orderly without employing other means for controlling the rate of reaction. These materials may be incorporated into naturally occurring clays, e.g., bentonite and kaolin, to improve the crush strength of the catalyst under commercial operating conditions. Said materials, i.e., clays, oxides, etc., function as binders for the catalyst. It is desirable to provide a catalyst having good crush strength because in commercial use, it is desirable to prevent the catalyst from breaking down into powder-like materials. These clay binders have been employed normally only for the purpose of improving the crush strength of the catalyst.

Naturally occurring clays which can be composited with layered oxide of the invention include the montmorillonite and kaolin family, which families include the subbentonites, and the kaolins commonly known as Dixie, McNamee, Georgia and Florida clays or others in which the main mineral constituent is halloysite, kaolinite, dickite, nacrite, or anauxite. Such clays can be used in the raw state as originally mined or initially subjected to calcination, acid treatment or chemical modification. Binders useful for compositing with layered materials also include inorganic oxides, notably alumina.

In addition to the foregoing materials, the layered oxide can be composited with a porous matrix material such as silica-alumina, silica-magnesia, silica-zirconia, silica-thoria, silica-beryllia, silica-titania as well as ternary compositions such as silica-alumina-thoria, silica-alumina-zirconia, silica-alumina-magnesia and silica-magnesia-zirconia.

The relative proportions of finely divided layered oxide and inorganic oxide matrix vary widely, with the layered oxide content ranging from 1 to 90 percent by weight and more usually, particularly when the composite is prepared in the form of beads, in the range 2 to 80 weight of the composite.

Alpha Values are reported hereinafter for various materials. It is noted that the Alpha Value is an approximate indication of the catalytic cracking activity of the catalyst compared to a standard catalyst and it gives the relative rate constant (rate of normal hexane conversion per volume of catalyst per unit time). It is based on the activity of the highly active silica-alumina cracking catalyst taken as an Alpha of 1 (Rate Constant = 0.016 sec$^{-1}$). The Alpha Test is described in U.S. Patent 3,354,078, in the Journal of Catalysis, Vol. 4, p. 527 (1965); Vol. 6, p. 278 (1966); and Vol. 61, p. 395 (1980). The experimental conditions of the test preferably include a constant temperature of 538°C and a variable flow rate as described in detail in the Journal of Catalysis, Vol. 61, p. 395.

MCM-36, especially when the layers thereof are composed of an aluminosilicate, may be a very catalytically active material. By way of contrast, other layered materials, such as clays, magadiite, kenyaite, and titanates, in pillared form are much less catalytically active than the very catalytically active forms of the pillared layered oxide, MCM-36. One measure of the catalytic activity of MCM-36 is the Alpha Value for MCM-36. Various catalytically active forms of MCM-36 may have Alpha Values in excess of 10, e.g., 50 or greater. Particularly catalyticaly active forms of MCM-36 comprise those with aluminosilicate layers, these layers having a silica to alumina molar ratio of 300 or less.

Another distinguishing feature of MCM-36, relative to other pillared layered oxides, is the porosity of the layers of MCM-36. Although other pillared oxide materials, such as pillared clays and the pillared materials, e.g., pillared silicates and titanates, discussed in the aforementioned U.S. Patent No. 4,859,648, have considerable porosity as a result of open interspathic regions, the individual layers of these materials are relatively dense, lacking pore windows formed by 8 or more oxygen atoms. On the other hand, the layers of MCM-36 would appear to have continuous channels having pore windows formed by rings of at least 8 oxygen atoms. More particularly, these pore windows in the layers of MCM-36 would appear to be formed by rings of 10 oxygen atoms. As indicated by argon physisorption measurements, the channels in the layers of MCM-36 have an effective pore diameter of greater than about 5 Angstroms.

The following Examples illustrate the invention.

EXAMPLE 1

This Example describes the synthesis of a material which may be swollen and pillared. Water, sodium hydroxide, sodium aluminate, silica (Ultrasil), and hexamethyleneimine (HMI) were combined in the following mole ratios:

2.5 Na$_2$O: Al$_2$O$_3$: 30 SiO$_2$:10 HMI: 580 H$_2$O.

The reaction mixture was heated in an autoclave to 143°C for 96 hours. The X-ray diffraction pattern for this material is shown pictorially in Figure 1.

EXAMPLE 2

A mixture of a 29 % solution of cetyltrimethylammonium (N,N,N-trimethyl-1-hexadecanaminium) hydroxide, 40 % tetrapropylammonium hydroxide and wet cake of Example 1 (20 % solids) in a relative weight ratio 105:33:27, respectively, was heated in an autoclave at 105°C with stirring for 42 hours. The solid product was isolated by decantation and filtration, and the wet cake was washed twice by mixing with water and filtration. The swollen material had the X-ray diffraction pattern given in the following Table 9.

TABLE 9

| 2 Theta | d(A) [1nm = 10Å] | $I/I_o$ x 100 |
|---|---|---|
| 1.6 | 55.2 | 100 |
| 4.88 | 18.1 | 2 |
| 6.38 | 13.85 | 3 |
| 7.15 | 12.36 | 21 |
| 7.96 | 11.11 | 6 |
| 9.47 | 9.34 | 4 |
| 12.81 | 6.91 | 2 |
| 14.56 | 6.08 | 1 |
| 19.99 | 4.44 | 9 |
| 21.44 | 4.14 | 5 |
| 21.88 | 4.06 | 7 |
| 22.44 | 3.96 | 8 |
| 23.35 | 3.81 | 3 |
| 24.91 | 3.57 | 6 |
| 25.90 | 3.44 | 21 |
| 26.53 | 3.36 | 4 |

EXAMPLE 3

The product of Example 2 (24 % solids) was combined with a 10 % solution of silica in aqueous tetramethylammonium hydroxide (molar ratio $TMA:SiO_2$ = 0.5) in a weight ratio 1:15. The mixture was heated for 20 hr in the steambox, filtered and air dried. The solid was contacted three times with 1 M ammonium nitrate (10 ml per 1 ml of solid) and the final product was obtained upon calcination at 540°C. The pillared, calcined material had the X-ray difraction pattern given in the following Table 10.

TABLE 10

| 2 Theta | d(A) [1nm = 10Å] | $I/I_o$ x 100 |
|---|---|---|
| 1.9 | 46.5 | 100 |
| 7.17 | 12.33 | 9.0 |
| 8.13 | 10.87 | 3.1 |
| 9.88 | 8.95 | 1.4 |
| 12.90 | 6.86 | 0.9 |
| 14.41 | 6.15 | 3.7 |
| 16.01 | 5.54 | 0.9 |
| 20.16 | 4.40 | 1.5 |
| 21.12 | 4.21 | 0.9 |
| 21.65 | 4.10 | 1.4 |
| 22.03 | 4.03 | 2.2 |
| 22.67 | 3.92 | 3.1 |
| 23.78 | 3.74 | 1.8 |
| 25.10 | 3.55 | 2.2 |
| 26.08 | 3.42 | 7.8 |
| 26.84 | 3.32 | 2.2 |

## EXAMPLE 4

In this case the swelling reagent was prepared by contacting a 29 % solution of cetyltrimethylammonium (N,N,N-trimethyl-1-hexadecanaminium) chloride with a hydroxide-for-halide exchange resin (one liter of wet resin with 1.4 milliequivalent/ml exchange capacity per 3 l of the solution). It will be referred to as 29 % CTMA-OH.

A mixture of 30 g of the Example 1 wet cake (30 % solids) and 150 g of the 29 % CTMA-OH solution was reacted in the steambox for 65 hours. The product was isolated by filtration, washed twice with 50 ml of water and air dried overnight yielding 10.6 g of the swollen product. The X-ray diffraction pattern for this swollen material is shown pictorially in Figure 2. The X-ray diffraction pattern for this swollen material is also given in the following Table 11.

TABLE 11

| 2 Theta | d(A) [1nm = 10Å] | I/I$_o$ x 100 |
|---|---|---|
| 1.7 | 52.0 | 100 |
| 2.8 | 31.6 | 20 |
| 5.24 | 16.86 | 10 |
| 5.61 | 15.75 | 6 |
| 7.13 | 12.40 | 32 |
| 7.99 | 11.06 | 5 |
| 9.58 | 9.23 | 3 |
| 12.81 | 6.91 | 3 |
| 13.98 | 6.33 | 1 broad |
| 14.60 | 6.07 | 2 |
| 15.69 | 5.65 | 2 |
| 19.60 | 4.53 | 11 broad |
| 21.29 | 4.17 | 12 |
| 21.92 | 4.05 | 6 |
| 22.44 | 3.96 | 10 |
| 23.27 | 3.82 | 6 broad shoulder |
| 24.94 | 3.57 | 9 |
| 25.93 | 3.44 | 26 |
| 26.60 | 3.35 | 8 |
| 28.00 | 3.19 | 3 broad |
| 29.08 | 3.07 | 1 |
| 31.51 | 2.839 | 2 |
| 33.09 | 2.707 | 1 broad |
| 33.75 | 2.656 | 1 broad |
| 34.70 | 2.585 | 1 broad |
| 36.30 | 2.475 | 1 |
| 37.09 | 2.424 | 1 |
| 37.74 | 2.384 | 3 |

EXAMPLE 5

This Example describes the pillaring of the swollen material of Example 4. The swollen material (8.6 g) was slurried with 50 g of tetraethylorthosilicate (TEOS) and heated at 80°C for 24 hours under the stream of nitrogen. After filtration and overnight drying the product (7.15 g) was hydrolyzed in water for 5 hr giving the pillared material (6.6 g) containing 68% solids based upon calcination at 450°C. The X-ray diffraction pattern for this pillared material is shown pictorially in Figure 3. TEM analysis of crystallites confirmed that the layers remained separated after this pillaring procedure. The X-ray diffraction pattern for this pillared, calcined material is also given in the following Table 12.

TABLE 12

| 2 Theta | d(A) [1nm = 10Å] | I/I$_o$ x 100 |
|---------|------------------|---------------|
| 1.7 | 52.0 | 100 |
| 7.14 | 12.38 | 43.9 |
| 8.02 | 11.02 | 14.3 |
| 9.75 | 9.07 | 7.2 |
| 12.82 | 6.90 | 2.8 |
| 14.36 | 6.17 | 18.9 |
| 15.95 | 5.56 | 1.7 |
| 20.01 | 4.44 | 7.0 |
| 21.57 | 4.12 | 6.1 |
| 21.99 | 4.04 | 9.1 |
| 22.58 | 3.94 | 13.9 |
| 23.65 | 3.76 | 8.7 |
| 25.04 | 3.56 | 11.1 |
| 26.02 | 3.42 | 35.4 |
| 26.71 | 3.34 | 10.2 |
| 31.62 | 2.829 | 2.2 |
| 33.44 | 2.680 | 2.0 |
| 36.42 | 2.467 | 1.1 |
| 37.15 | 2.420 | 0.4 |
| 37.87 | 2.376 | 2.2 |

EXAMPLE 6

This Example describes another embodiment of swelling the material of Example 1 using a different swelling medium. The swelling reagent, was prepared by contacting a solution of cetyltrimethylammonium (N,N,N-trimethyl-1-hexadecanaminium) chloride composed of 50 % of the latter, 35 % 2-propanol and 15 % water, with a hydroxide-for-halide exchange resin (two exchanges using 1/2 liter of wet resin with 1.4 milliequivalent/ml exchange capacity per 1 l of the solution; 200 ml of ethanol was also added). It will be referred to as 50 % CTMA-OH.

300 ml of the slurry containing about 20 % of the material of Example 1 was mixed with 300 ml of the 50 % CTMA-OH solution. The mixture was heated in a 1 l autoclave for 24 hours at 150°C with stirring. The product was isolated by filtration, washed twice with 400 ml of water and air dried overnight yielding about 140 g of the swollen product. The X-ray diffraction pattern for this swollen material is given in the following Table 13.

TABLE 13

| 2 Theta | d(A) [1nm = 10Å] | I/I$_o$ x 100 |
|---|---|---|
| 1.8 | 49.1 | 100 |
| 5.18 | 17.06 | 25 |
| 7.20 | 12.28 | 55 |
| 8.09 | 10.93 | 9 |
| 9.60 | 9.21 | 7 |
| 12.87 | 6.88 | 4 |
| 14.67 | 6.04 | 3 |
| 15.80 | 5.61 | 2 |
| 19.73 | 4.50 | 22 broad |
| 21.45 | 4.14 | 18 |
| 22.00 | 4.04 | 5 |
| 22.52 | 3.95 | 22 |
| 23.39 | 3.80 | 9 broad shoulder |
| 25.03 | 3.56 | 19 |
| 26.02 | 3.42 | 59 |
| 26.69 | 3.34 | 16 |
| 29.19 | 3.06 | 3 |
| 31.60 | 2.831 | 3 |
| 33.16 | 2.702 | 2 |
| 36.37 | 2.470 | 2 |
| 37.02 | 2.428 | 1 |
| 37.82 | 2.379 | 7 |

## EXAMPLE 7

This Example describes swelling of the material prepared from the synthesis mixture of Example 1 that has been crystallized for 48 hours (see below) rather than 96 hours.

The combination of 504 g of water, 11.4 g of 50 % sodium hydroxide, 11.4 g of sodium aluminate (43.5 % Al$_2$O$_3$, 30 % Na$_2$O), 64.9 g of silica (Ultrasil) and 34.2 g of hexamethyleneimine was reacted in an autoclave at 143°C for 48 hours with stirring. The product was filtered and washed thoroughly with water.

500 g of the wet cake material (24 % solids) described above was mixed with 3 l of 29 % CTMA-OH solution and stirred for 48 hours at room temperature. The swollen product was isolated by filtration, washed twice with 500 ml of water and air dried overnight. The X-ray diffraction pattern for this swollen material is given in the following Table 14.

TABLE 14

| 2 Theta | d(A) [1nm = 10Å] | I/I$_o$ x 100 |
|---|---|---|
| 1.7 | 52.0 | 100 |
| 5.18 | 17.06 | 7.3 |
| 6.81 | 12.98 | 2.3 |
| 7.10 | 12.45 | 5.7 |
| 8.79 | 10.06 | 2.7 very broad |
| 12.73 | 6.95 | 0.6 |
| 13.82 | 6.41 | 0.4 |
| 14.55 | 6.09 | 0.3 |
| 15.59 | 5.68 | 0.7 |
| 18.39 | 4.82 | 1.3 broad shoulder |
| 19.06 | 4.66 | 2.6 shoulder |
| 19.77 | 4.49 | 4.8 |
| 21.01 | 4.23 | 3.4 broad |
| 22.28 | 3.99 | 5.0 |
| 23.35 | 3.81 | 2.3 broad shoulder |
| 24.91 | 3.57 | 3.0 |
| 25.90 | 3.44 | 8.0 |
| 26.50 | 3.36 | 4.4 |

EXAMPLE 8

This Example describes pillaring of the swollen material of Example 7. 235 g of the product was ground and combined with 1.4 liter of TEOS and treated by a procedure similar to Example 5. The product contained 65 % solids based on calcination at 540°C. A sample of the calcined product was examined by argon physisorption which revealed a dual pore system with diameters of 6.3 Angstroms and about 28 Angstroms.

To determine the pore diameters, a 0.2 gram sample of the product of Example 8 was placed in a glass sample tube and attached to a physisorption apparatus as described in U.S. Patent No. 4,762,010.

The sample was heated to 300°C for 3 hours in vacuo to remove adsorbed water. Thereafter, the sample was cooled to 87°K by immersion of the sample tube in liquid argon. Metered amounts of gaseous argon were then admitted to the sample in stepwise manner as described in U.S. Patent No. 4,762,010, column 20. From the amount of argon admitted to the sample and the amount of argon left in the gas space above the sample, the amount of argon adsorbed can be calculated. For this calculation, the ideal gas law and the calibrated sample volumes were used. (See also S.J. Gregg et al., Adsorption, Surface Area and Porosity, 2nd ed., Academic Press, 1982). In each instance, a graph of the amount adsorbed versus the relative pressure above the sample, at equilibrium, constitutes the adsorption isotherm. It is common to use relative pressures which are obtained by forming the ratio of the equilibrium pressure and the vapor pressure $P_o$ of the adsorbate at the temperature where the isotherm is measured. Sufficiently small amounts of argon were admitted in each step to generate 168 data points in the relative pressure range from 0 to 0.6. At least about 100 points are required to define the isotherm with sufficient detail.

The step (inflection) in the isotherm, indicates filling of a pore system. The size of the step indicates the amount adsorbed, whereas the position of the step in terms of $P/P_o$ reflects the size of the pores in which the adsorption takes place. Larger pores are filled at higher $P/P_o$. In order to better locate the position of the step in the isotherm, the derivative with respect to log ($P/P_o$) is formed. The adsorption peak (stated in terms of log ($P/P_o$)) may be related to the physical pore diameter (Å) by the following formula:

$$\log(P/P_o)= \frac{K}{d-0.38}\left(\frac{S^4}{3(L-D/2)^3} - \frac{S^{10}}{9(L-D/2)^9} - \frac{S^4}{3(D/2)^3} + \frac{S^{10}}{9(D/2)^9}\right)$$

where d = pore diameter in nanometers, K = 32.17, S = 0.2446, L = d + 0.19, and D = 0.57.

This formula is derived from the method of Horvath and Kawazoe (G. Horvath et al., J. Chem. Eng. Japan, 16 (6) 470(1983)). The constants required for the implementation of this formula were determined from a measured isotherm of $AlPO_4$-5 and its known pore size. This method is particularly useful for microporous materials having pores of up to about 60 Angstroms in diameter.

The X-ray diffraction pattern for this pillared, calcined material of Example 8 is given in the following Table 15.

TABLE 15

| 2 Theta | d(A) [1nm = 10Å] | $I/I_o$ x 100 |
|---------|-------------------|---------------|
| 1.7 | 52.0 | 100 |
| 7.13 | 12.40 | 23.3 |
| 8.08 | 10.94 | 7.3 broad |
| 12.84 | 6.89 | 1.5 |
| 14.38 | 6.16 | 8.4 |
| 15.83 | 5.60 | 0.9 |
| 19.88 | 4.47 | 2.3 broad |
| 21.61 | 4.11 | 2.2 |
| 22.07 | 4.03 | 3.3 broad |
| 22.67 | 3.92 | 4.3 broad |
| 23.67 | 3.76 | 2.7 |
| 25.06 | 3.55 | 4.0 |
| 26.06 | 3.42 | 12.8 |
| 26.75 | 3.33 | 4.1 |

EXAMPLE 9

This Example describes a preparation involving pillaring with an aqueous solution of tetramethylammomium silicate, TMA-Si, previously defined in Example 3 and formulation of an alumina bound catalyst.

A swollen product was obtained by reacting 330 g of the Example 1 wet cake (42 % solids) and 2700 ml of 29 % CTMA-OH for 48 hours in the steambox. The solid was isolated by filtration, washed by contacting with 0.5 l of water and air dried. The X-ray diffraction pattern of this swollen material is given in the following Table 16.

TABLE 16

| 2 Theta | d(A) [1nm = 10Å] | I/I_o x 100 |
|---|---|---|
| 1.7 | 52.0 | 100 |
| 2.7 | 32.7 | 28.1 |
| 5.38 | 16.43 | 10.8 |
| 7.12 | 12.41 | 14.5 |
| 8.10 | 10.91 | 2.9 |
| 9.61 | 9.20 | 1.5 broad |
| 12.77 | 6.93 | 1.0 |
| 14.50 | 6.11 | 0.9 |
| 19.88 | 4.47 | 6.8 broad |
| 21.41 | 4.15 | 6.6 |
| 21.94 | 4.05 | 4.4 |
| 22.46 | 3.96 | 7.7 |
| 23.05 | 3.86 | 3.3 shoulder |
| 23.60 | 3.77 | 3.2 shoulder |
| 24.93 | 3.57 | 4.8 |
| 25.93 | 3.44 | 12.4 |
| 26.55 | 3.36 | 4.7 broad |

25 g of the above swollen material was slurried with 150 g of the TMA-Si solution and heated in a steambox for 20 hours. The solid product was filtered and air dried (yield 31 g). A small sample was calcined to verify that pillaring was successful. The remainder of the product was mixed with alumina alpha-monohydrate (Kaiser alumina) (solid ratio 65:35) and ion exchanged by contacting three times with 1 M ammonium nitrate. After drying, the solid was pelletized and was calcined by a hybrid method: 3 hr in nitrogen at 450°C followed by slow bleeding of air and full air calcination at 540°C for 6 hours.

EXAMPLE 10

This Example describes the preparation, swelling and pillaring of the material related to that of Example 1 but with a higher content of alumina (Si/Al$_2$ ratio around 18).

A combination of 258 g of water, 6 g of 50 % sodium hydroxide, 13.4 g of sodium aluminate (25 % Al$_2$O$_3$, 19 % Na$_2$O), 51.4 g of silica (Ultrasil), and 27.1 g of hexamethyleneimmine was reacted in an autoclave at 143°C for 34 hours with stirring. The solid product was isolated by filtration and washed with water.

70 g of the above wet cake (about 20 % solids) was swollen by contacting with 300 ml of 29 % CTMA-OH for 43 hours at room temperature with stirring. The product was isolated by filtration, washed with water and air dried. It was then pillared (19 g) by mixing with TMA-Si (113 g) and heating in the steambox for 20 hr. Further processing, including binding with alumina, exchange and calcination was carried out as in Example 9. The X-ray diffraction pattern for this pillared, calcined material is given in the following Table 17.

TABLE 17

| 2 Theta | d(A) [1nm = 10Å] | I/I$_o$ x 100 |
|---|---|---|
| 1.5 | 58.9 | 100 |
| 7.13 | 12.40 | 55 |
| 8.20 | 10.78 | 19 broad |
| 12.84 | 6.89 | 5 |
| 14.41 | 6.15 | 26 |
| 15.56 | 5.69 | 5 |
| 20.04 | 4.43 | 9 |
| 21.70 | 4.10 | 9 broad shoulder |
| 22.14 | 4.01 | 12 broad |
| 22.60 | 3.93 | 19 broad |
| 23.50 | 3.79 | 13 broad |
| 25.09 | 3.55 | 11 |
| 26.04 | 3.42 | 33 |
| 26.64 | 3.35 | 21 |

EXAMPLE 11

This Example describes swelling of the material of Example 1 with dodecyltrimethylammonium chloride/hydroxide.

The swelling reagent, was prepared by contacting a 33 % solution of dodecyltrimethylammonium (N,N,N-trimethyl-1-dodecanaminium) chloride with a hydroxide-for-halide exchange resin (one liter of wet resin with 1.4 milliequivalent/ml exchange capacity per 2 l of the solution). It will be referred to as 33 % DOTMA-OH.

The wet cake of Example 1 (50 g, about 20 % solids) was mixed with 500 ml g of DOTMA-OH and heated in the steambox for 48 hours. The solid was isolated by filtration and washed with water. The air dried product showed X-ray diffraction pattern similar to that of Figure 2 with a very intense low angle line. The X-ray diffraction pattern for this swollen material is given in the following Table 18.

TABLE 18

| 2 Theta | d(A) [1nm = 10Å] | $I/I_o$ x 100 |
|---|---|---|
| 1.7 | 52.0 | 100 |
| 6.15 | 14.37 | 25 broad |
| 6.31 | 14.01 | 6 |
| 7.02 | 12.59 | 18 |
| 7.92 | 11.16 | 6 |
| 9.39 | 9.42 | 11 |
| 12.74 | 6.95 | 6 |
| 14.13 | 6.27 | 7 broad |
| 15.63 | 5.67 | 7 |
| 18.88 | 4.70 | 11 broad |
| 19.95 | 4.45 | 20 broad |
| 22.34 | 3.98 | 17 |
| 23.49 | 3.79 | 7 |
| 24.85 | 3.58 | 13 |
| 25.81 | 3.45 | 28 |
| 26.57 | 3.35 | 12 |
| 27.93 | 3.19 | 14 |

A portion of the swollen product was mixed with the TMA-silicate solution described above (Example 3) in the weight ratio 1:10, respectively. After 20 hours reaction in the steambox the solid was filtered off, air dried and contacted three times with 1 M ammonium nitrate. The final product, obtained by calcination at 540°C had a pattern essentially as described in Table 4. More particularly, the X-ray diffraction pattern for this pillared, calcined material is given in the following Table 19.

TABLE 19

| 2 Theta | d(A) [1nm = 10Å] | I/I$_o$ x 100 |
|---|---|---|
| 1.8 | 49.1 | 100 |
| 7.13 | 12.40 | 32 |
| 8.00 | 11.05 | 13 |
| 9.88 | 8.95 | 11 |
| 12.88 | 6.87 | 4 |
| 14.32 | 6.18 | 15 |
| 15.94 | 5.56 | 4 |
| 18.17 | 4.88 | 2 |
| 20.30 | 4.37 | 8 broad |
| 21.57 | 4.12 | 6 |
| 21.96 | 4.05 | 10 |
| 22.65 | 3.93 | 15 |
| 23.75 | 3.75 | 10 |
| 25.04 | 3.56 | 9 |
| 26.06 | 3.42 | 29 |
| 26.86 | 3.32 | 9 |
| 27.66 | 3.22 | 6 broad |

EXAMPLE 12

The Alpha values for the products from Examples 3 and 9 were measured to be 75 and 116, respectively.

The following Table 20 provides common peaks observed in the X-ray diffraction (XRD) patterns for the swollen materials of the foregoing Examples 2, 4, 6, 7, 9, and 11.

TABLE 20

| 2 Theta | d(A) [1nm = 10Å] | I/I$_o$ x 100 |
|---|---|---|
| 1.7 | 52.0 ± 10.0 | 100 |
| 5.3 | 16.7 ± 4.0 | 2-25 |
| 7.12 | 12.41 ± 0.25 | 6-55 |
| 8.01 | 11.04 ± 0.22 | 3-9 (Note 1) |
| 9.53 | 9.28 ± 0.19 | 2-11 (Note 1) |
| 12.79 | 6.92 ± 0.14 | 1-6 |
| 14.50 | 6.11 ± 0.24 | 1-7 |
| 15.68 | 5.65 ± 0.11 | 1-7 (Note 3) |
| 19.82 | 4.48 ± 0.09 | 5-22 |
| 21.94 | 4.05 ± 0.08 | 4-7 (Note 2) |
| 22.44 | 3.96 ± 0.08 | 8-22 (Note 1) |
| 23.41 | 3.80 ± 0.08 | 2-9 |
| 24.93 | 3.57 ± 0.07 | 3-19 |
| 25.92 | 3.44 ± 0.07 | 8-59 |
| 26.57 | 3.35 ± 0.07 | 4-16 |

Note 1: Peak is unresolved in the XRD pattern for Example 7.
Note 2: Peak is unresolved in the XRD pattern for Examples 7 and 11.
Note 3: Peak is not visible in the XRD pattern for Examples 2 and 9.

The following Table 21 provides common peaks observed in the X-ray diffraction patterns for the pillared, calcined materials of the foregoing Examples 3, 5, 8, 10, and 11.

TABLE 21

| 2 Theta | d(A) [1nm = 10Å] | I/I$_o$ x 100 |
|---|---|---|
| 1.7 | 52.0 ± 12.0 | 100 |
| 7.14 | 12.38 ± 0.25 | 9-55 |
| 8.08 | 10.94 ± 0.22 | 3-19 |
| 9.82 | 9.01 ± 0.18 | 1-11 (Note 1) |
| 12.86 | 6.88 ± 0.14 | 1-5 |
| 14.38 | 6.16 ± 0.12 | 4-26 |
| 15.86 | 5.59 ± 0.11 | 1-5 |
| 20.09 | 4.42 ± 0.09 | 1-9 |
| 21.61 | 4.11 ± 0.08 | 1-9 |
| 22.02 | 4.04 ± 0.08 | 2-12 |
| 22.63 | 3.93 ± 0.08 | 3-19 |
| 23.67 | 3.76 ± 0.08 | 2-13 |
| 25.07 | 3.55 ± 0.07 | 2-11 |
| 26.04 | 3.42 ± 0.07 | 8-35 |
| 26.76 | 3.33 ± 0.07 | 2-21 |
| Note 1: Peak is unresolved in the XRD pattern for Examples 8 and 10. | | |

## Claims

1. A layered oxide material having an X-ray diffraction pattern comprising the following lines:

| d(A) [1nm = 10Å] | I/I$_o$ |
|---|---|
| >32.2 | vs |
| 12.13-12.66 | w-s |
| 3.35-3.51 | w-s |

2. A layered oxide material according to claim 1, wherein said X-ray diffraction pattern comprises additional lines with a d(A) spacing less than the line at 12.13-12.66, but none of said additional lines has an intensity greater than that of the line at the d(A) spacing of 12.13-12.66 or at 3.35-3.51, whichever has the higher intensity.

3. A layered oxide material according to claim 2, wherein said X-ray diffraction pattern comprises the following lines:

| d(A) [1nm = 10Å] | I/I$_o$ |
|---|---|
| >32.2 | vs |
| 12.41 ± 0.25 | w-s |
| 11.04 ± 0.22 | w |
| 9.28 ± 0.19 | w |
| 6.92 ± 0.14 | w |
| 4.48 ± 0.09 | w-m |
| 3.96 ± 0.08 | w-m |
| 3.57 ± 0.07 | w-m |
| 3.44 ± 0.07 | w-s |
| 3.35 ± 0.07 | w |

4. A layered oxide material according to claim 3, wherein said X-ray diffraction pattern further comprises lines at the following d(A) spacings: 16.7 ± 4.0 (w-m); 6.11 ± 0.24 (w) ; 4.05 ± 0.08 (w) ; and 3.80 ± 0.08 (w).

5. A layered oxide material according to claim 1 which is a swollen layered oxide material.

6. A layered oxide material according to claim 5 wherein the layers have a composition comprising the molar relationship

$$X_2O_3:(n)YO_2$$

wherein n is at least about 5, X is a trivalent element and Y is a tetravalent element.

7. A method of synthesizing the swollen layered oxide material of claim 5, comprising contacting an as-synthesized layered zeolite material with an organic swelling agent under conditions to swell said as-synthesized material, wherein said as-synthesized material has an X-ray diffraction pattern comprising the following lines:

| d(A) [1nm = 10Å] | I/I$_o$ |
|---|---|
| 13.53 ± 0.2 | m-vs |
| 12.38 ± 0.2 | m-vs |
| 11.13 ± 0.2 | w-s |
| 9.15 ± 0.15 | w-s |
| 6.89 ± 0.15 | w-m |
| 4.47 ± 0.10 | w-m |
| 3.95 ± 0.08 | w-vs |
| 3.56 ± 0.06 | w-m |
| 3.43 ± 0.06 | m-vs |
| 3.36 ± 0.05 | w-s |

8. A method according to claim 7, wherein said as-synthesized material is prepared by a method comprising the steps of:

(i) Preparing a reaction mixture capable of forming said as-synthesized material upon crystallization, said reaction mixture containing alkali or alkaline earth metal cations, a source of silica, a source of alumina, water and an organic directing agent; and

(ii) maintaining said reaction mixture under crystallization conditions until crystals of said as-synthesized material are formed.

9. A method according to claim 8, wherein said organic directing agent is selected from heterocyclic imines, cycloalkyl amines and adamantane quaternary ammonium ions.

10. A method according to claim 8, wherein said organic directing agent is selected from hexamethyleneimine, 1,4-diazacycloheptane, azacyclooctane, aminocyclohexane, aminocycloheptane, aminocyclopentane, N,N,N-trimethyl-1-adamantanammmonium ions, and N,N,N-trimethyl-2-adamantanammmonium ions.

11. A layered oxide material according to claim 1, which after calcination in air for 6 hours at 540°C has the following X-ray diffraction pattern:

| d(A) [1nm = 10Å] | $I/I_o$ |
|---|---|
| >32.2 | vs |
| $12.38 \pm 0.25$ | w-m |
| $3.42 \pm 0.07$ | w-m |

12. A layered oxide material according to claim 11, wherein said X-ray diffraction pattern comprises additional lines with a d(A) spacing less than the line at $12.38 \pm 0.25$, but none of said additional lines have an intensity greater than the line at the d(A) spacing of $12.38 \pm 0.25$ or $3.42 \pm 0.07$, whichever has higher intensity.

13. A layered oxide material according to claim 11, wherein said X-ray diffraction pattern comprises the following lines:

| d(A) [1nm = 10Å] | $I/I_o$ |
|---|---|
| >32.2 | vs |
| $12.38 \pm 0.25$ | w-m |
| $10.94 \pm 0.22$ | w-m |
| $9.01 \pm 0.18$ | w |
| $6.88 \pm 0.14$ | w |
| $6.16 \pm 0.12$ | w-m |
| $3.93 \pm 0.08$ | w-m |
| $3.55 \pm 0.07$ | w |
| $3.42 \pm 0.07$ | w-m |
| $3.33 \pm 0.07$ | w-m |

14. A layered oxide material according to claim 11, which is a pillared layered oxide material.

15. A method for preparing the pillared layered material of claim 14, said method comprising the steps of:

(i) preparing a reaction mixture capable of forming a layered material upon crystallization, said reaction mixture containing alkali or alkaline earth metal cations, a source of silica containing at least about 30 wt% solid silica, an oxide of aluminum, water and hexamethyleneimine;
(ii) maintaining said reaction mixture under crystallization conditions until crystals of layered material are formed;
(iii) swelling said layered material of step (ii) by contacting said layered material with a swelling agent; and
(iv) contacting the swollen material of step (iii) with a pillaring agent.

16. A method according to claim 15, wherein said reaction mixture has a composition in terms of mole ratios within the following ranges:

| | |
|---|---|
| $SiO_2/Al_2O_3$ | = 10 to 80 |
| $H_2O/SiO_2$ | = 5 to 100 |
| $OH^-/SiO_2$ | = 0.01 to 1.0 |
| $M/SiO_2$ | = 0.01 to 2.0 |
| $R/SiO_2$ | = 0.05 to 1.0 |

wherein R represents hexamethyleneimine and M represents alkali or alkaline earth metal.

17. A method according to claim 15, wherein said layered material of step (ii) has the X-ray diffraction pattern comprising the following lines:

| d(A) [1nm = 10Å] | $I/I_o$ |
|---|---|
| 13.53 ± 0.2 | m-vs |
| 12.38 ± 0.2 | m-vs |
| 11.13 ± 0.2 | w-s |
| 9.15 ± 0.15 | w-s |
| 6.89 ± 0.15 | w-m |
| 4.47 ± 0.10 | w-m |
| 3.95 ± 0.08 | w-vs |
| 3.56 ± 0.06 | w-m |
| 3.43 ± 0.06 | m-vs |
| 3.36 ± 0.05 | w-s |

wherein the swollen material of step (iii) has the X-ray diffraction pattern comprising the following lines:

| d(A) [1nm = 10Å] | $I/I_o$ |
|---|---|
| >32.2 | vs |
| 12.41 ± 0.25 | w-s |
| 3.44 ± 0.07 | w-s |

and wherein said swelling agent comprises a cetyltrimethylammonium cation.

18. A method according to claim 15, wherein the swelling step (iii) is conducted at a pH range of 11 to 14.

19. A method according to claim 15, wherein the swelling step (iii) is conducted at a pH range of 12.5 to 13.5.

**Patentansprüche**

1. Schichtoxidmaterial mit einem Röntgenbeugungsdiagramm, das die folgenden Linien umfaßt:

| d(Å) (1 nm = 10 Å) | $I/I_o$ |
|---|---|
| >32,2 | vs |
| 12,13-12,66 | w-s |
| 3,35-3,51 | w-s |

2. Schichtoxidmaterial nach Anspruch 1, wobei das Röntgenbeugungsdiagramm weitere Linien mit einem d(Å)-Abstand kleiner als die Linie bei 12,13-12,66 umfaßt, wobei jedoch keine der weiteren Linien eine größere Intensität als die Linie beim d(Å)-Anstand von 12,13-12,66 oder bei 3,35-3,51 hat, ganz gleich welche die höhere Intensität aufweist.

3. Schichtoxidmateiral nach Anspruch 2, wobei das Röntgenbeugungsdiagramm die folgenden Linien umfaßt:

| d(Å) (1 nm = 10 Å) | $I/I_o$ |
|---|---|
| >32,2 | vs |
| $12,41 \pm 0,25$ | w-s |
| $11,04 \pm 0,22$ | w |
| $9,28 \pm 0,19$ | w |
| $6,92 \pm 0,14$ | w |
| $4,48 \pm 0,09$ | w-m |
| $3,96 \pm 0,08$ | w-m |
| $3,57 \pm 0,07$ | w-m |
| $3,44 \pm 0,07$ | w-s |
| $3,35 \pm 0,07$ | w |

4. Schichtoxidmaterial nach Anspruch 3, wobei das Röntgenbeugungsdiagramm außerdem Linien bei folgenden d(Å)-Abständen umfaßt: $16\ 7 \pm 4,0$ (w-m), $6,11 \pm 0,24$ (w), $4,05 \pm 0,08$ (w) und $3,80 \pm 0,08$ (w).

5. Schichtoxidmaterial nach Anspruch 1, das ein gequollenes Schichtoxidmaterial ist.

6. Schichtoxidmaterial nach Anspruch 5, wobei die Schichten eine Zusammensetzung aufweisen, die das Molverhältnis

$$X_2O_3:(n)YO_2$$

haben, worin n mindestens etwa 5 beträgt, X ein dreiwertiges Element und Y ein vierwertiges Element sind.

7. Verfahren zur Synthese des gequollenen Schichtoxidmaterials nach Anspruch 5, das den Kontakt eines synthetisierten geschichteten Zeolithmaterials mit einem organischen Quellmittel bei Bedingungen umfaßt, damit das synthetisiertes Material quillt, wobei das synthetisierte Material ein Röntgenbeugungsdiagramm aufweist, das die folgenden Linien umfaßt:

| d(Å) (1 nm = 10 Å) | I/I$_o$ |
|---|---|
| 13,53 ± 0,2 | m-vs |
| 12,38 ± 0,2 | m-vs |
| 11,13 ± 0,2 | w-s |
| 9,15 ± 0,15 | w-s |
| 6,89 ± 0,15 | w-m |
| 4,47 ± 0,10 | w-m |
| 3,95 ± 0,08 | w-vs |
| 3,56 ± 0,06 | w-m |
| 3,43 ± 0,06 | m-vs |
| 3,36 ± 0,05 | w-s |

**8.** Verfahren nach Anspruch 7, wobei das synthetisierte Material nach einem Verfahren hergestellt wird, welches die Schritte umfaßt:

(i) Herstellen einer Reaktionsmischung, die beim Kristallisieren das synthetisierte Material bilden kann, wobei die Reaktionsmischung Alkali- oder Erdalkalimetall-Kationen, eine Quelle von Siliciumdioxid, eine Quelle von Aluminiumoxid, Wasser und ein organisches Richtmittel umfaßt, und
(ii) Halten der Reaktionsmischung bei Kristallistationsbedingungen, bis sich Kristalle des synthetisierten Materials gebildet haben.

**9.** Verfahren nach Anspruch 8, wobei das organische Richtmittel aus heterocyclischen Iminen, Cycloalkylaminen und quaternären Adamantanammonium-Ionen ausgewählt ist.

**10.** Verfahren nach Anspruch 8, wobei das organische Richtmittel aus Hexamethylenimin, 1,4-Diazacycloheptan, Azacyclooctan, Aminocyclohexan, Aminocycloheptan, Aminocyclopentan, N,N,N-Trimethyl-1-adamantanammonium-Ionen und N,N,N-Trimethyl-2-adamantanammonium-Ionen ausgewählt ist.

**11.** Schichtoxidmaterial nach Anspruch 1, das nach 6-stündigem Kalzinieren in Luft bei 540°C folgendes Röntgenbeugungsdiagramm aufweist:

| d(Å) (1 nm = 10 Å) | I/I$_o$ |
|---|---|
| >32,2 | vs |
| 12,38 ±0,25 | w-m |
| 3,42 ±0,07 | w-m |

**12.** Schichtoxidmaterial nach Anspruch 11, wobei das Röntgenbeugungsdiagramm weitere Linien mit einem d(Å)-Abstand kleiner als die Linie bei 12,38 ± 0,25 umfaßt, wobei jedoch keine der weiteren Linien eine größere Intensität als die Linie beim d(Å)-Abstand von 12,38 ± 0,25 oder 3,42 ± 0,07 aufweist, welche auch immer die größere Intensität hat.

**13.** Schichtoxidmaterial nach Anspruch 11, wobei das Röntgenbeugungsdiagramm die folgenden Linien umfaßt:

| d(Å) (1 nm = 10 Å) | $I/I_o$ |
|---|---|
| >32,2 | vs |
| 12,38 ± 0,25 | w-m |
| 10,94 ± 0,22 | w-m |
| 9,01 ± 0,18 | w |
| 6,88 ± 0,14 | w |
| 6,16 ± 0,12 | w-m |
| 3,93 ± 0,08 | w-m |
| 3,55 ± 0,07 | w |
| 3,42 ± 0,07 | w-m |
| 3,33 ± 0,07 | w-m |

14. Schichtoxidmaterial nach Anspruch 11, das ein gestütztes Schichtoxidmaterial ist.

15. Verfahren zur Herstellung des gestützten Schichtoxidmaterials nach Anspruch 14, wobei das Verfahren die Schritte umfaßt:

(i) Herstellen einer Reaktionsmischung, die beim Kristallisieren ein Schichtmaterial bilden kann, wobei die Reaktionsmischung Alkali- oder Erdalkalimetall-Kationen, eine Quelle von Siliciumdioxid, die mindestens etwa 30 Gew.-% festes Siliciumdioxid enthält, ein Oxid von Aluminium, Wasser und Hexamethylenimin umfaßt;
(ii) Halten der Reaktionsmischung bei Kristallistationsbedingungen, bis sich Kristalle des Schichtmaterials gebildet haben;
(iii) Quellen des Schichtmaterials vom Schritt (ii) durch Kontakt des Schichtmaterials mit einem Quellmittel; und
(iv) Kontakt des gequollenen Materials vom Schritt (iii) mit einem stützenden Mittel.

16. Verfahren nach Anspruch 15, wobei die Reaktionsmischung eine Zusammensetzung in Molverhältnissen innerhalb der folgenden Bereiche hat:

| | |
|---|---|
| $SiO_2/Al_2O_3$ | = 10 bis 80 |
| $H_2O/SiO_2$ | = 5 bis 100 |
| $OH^-/SiO_2$ | = 0,01 bis 1,0 |
| $M/SiO_2$ | = 0,01 bis 2,0 |
| $R/SiO_2$ | = 0,05 bis 1,0 |

worin R Hexamethylenimin ist und M ein Alkali- oder Erdalkalimetall darstellt.

17. Verfahren nach Anspruch 15, wobei das Schichtmaterial vom Schritt (ii) ein Röntgenbeugungsdiagramm aufweist, das folgende Linien umfaßt:

| d(Å) (1 nm = 10 Å) | I/I$_o$ |
|---|---|
| 13,53 ± 0,2 | m-vs |
| 12,38 ± 0,2 | m-vs |
| 11,13 ± 0,2 | w-s |
| 9,15 ± 0,15 | w-s |
| 6,89 ± 0,15 | w-m |
| 4,47 ± 0,10 | w-m |
| 3,95 ± 0,08 | w-vs |
| 3,56 ± 0,06 | w-m |
| 3,43 ± 0,06 | m-vs |
| 3,36 ± 0,05 | w-s |

wobei das gequollene Material vom Schritt (iii) ein Röntgenbeugungsdiagramm aufweist, das folgende Linien umfaßt:

| d(Å) (1 nm = 10 Å) | I/I$_o$ |
|---|---|
| >32,2 | vs |
| 12,41 ± 0,25 | w-s |
| 3,44 ± 0,07 | w-s |

und wobei das Quellmittel ein Cetyltrimethylammonium-Kation umfaßt.

18. Verfahren nach Anspruch 15, wobei der Schritt des Quellens (iii) in einem pH-Bereich von 11 bis 14 durchgeführt wird.

19. Verfahren nach Anspruch 15, wobei der Schritt des Quellens (iii) in einem pH-Bereich von 12,5 bis 13,5 durchgeführt wird.

**Revendications**

1. Un oxyde stratifié présentant un spectre de diffraction aux rayons-X comprenant les raies suivantes:

| d(Å) [1 nm = 10 Å] | I/I$_o$ |
|---|---|
| >32,2 | vs |
| 12,13 ± 12,66 | w-s |
| 3,35 ± 3,51 | w-s |

2. Un oxyde stratifié selon la revendication 1, dans lequel ledit spectre de diffraction aux rayons-X comprend des raies supplémentaires avec une distance d(A) inférieure à la raie de 12,13 - 12,66, mais dans lequel aucune de ces raies supplémentaires ne possède une intensité supérieure à celle de la raie de la distance d(A) de 12,13 - 12,66 ou à 3,35-3,51, selon celle qui a l'intensité la plus élevée.

**3.** Un oxyde stratifié selon la revendication 2, dans lequel le spectre de diffraction aux rayons-X comprend les raies suivantes :

| d(Å) | I/I$_o$ |
|---|---|
| >32,2 | vs |
| 12,41 ± 0,25 | w-s |
| 11,04 ± 0,22 | w |
| 9,28 ± 0,19 | w |
| 6,92 ± 0,14 | w |
| 4,48 ± 0,09 | w-m |
| 3,96 ± 0,08 | w-m |
| 3,57 ± 0,07 | w-m |
| 3,44 ± 0,07 | w-s |
| 3,35 ± 0,07 | w |

**4.** Un oxyde stratifié selon la revendication 3 dans lequel ledit spectre de diffraction aux rayons-X comprend en outre des raies aux distances d (A) suivantes : 167 ± 4,0 (w-m); 6,11 ± 0,24 (w) ; 4,05 ± 0,08 (w) ; et 3,80 ± 0,08 (w).

**5.** Un oxyde stratifié selon la revendication 1, qui est un oxyde stratifié gonflé.

**6.** Un oxyde stratifié selon la revendication 5 dans lequel les couches ont une composition répondant à la relation molaire $X_2O_3$ :(n)$YO_2$, n étant un nombre au moins égal à 5, X étant un élément trivalent et Y étant un élément tétravalent.

**7.** Un procédé de synthèse de l'oxyde stratifié gonflé selon la revendication 5, comprenant la mise en contact d'une zéolite stratifiée telle qu'obtenue par synthèse avec un agent gonflant sous des conditions propres à gonfler ledit matériau tel qu'obtenu par synthèse, ledit matériau tel qu'obtenu par synthèse présentant un spectre de diffraction aux rayons-X comprenant les raies suivantes :

| d(Å) [1 nm = 10 Å] | I/I$_o$ |
|---|---|
| 13,53 ± 0,2 | m-vs |
| 12,38 ± 0,2 | m-vs |
| 11,13 ± 0,2 | w-s |
| 9,15 ± 0,15 | w-s |
| 6,89 ± 0,15 | w-m |
| 4,47 ± 0,10 | w-m |
| 3,95 ± 0,08 | w-vs |
| 3,56 ± 0,06 | w-m |
| 3,43 ± 0,06 | m-vs |
| 3,36 ± 0,05 | w-s |

**8.** Un procédé selon la revendication 7, dans lequel ledit matériau tel qu'obtenu par synthèse est préparé une méthode comprenant les étapes suivantes

(i) préparation d'un mélange réactionnel capable de former ledit matériau tel qu'obtenu par synthèse par cristallisation, ledit mélange réactionnel comprenant des cations de métaux alcalins ou de métaux alcalino-terreux, une source de silice, une source d'alumine, de l'eau et un agent d'orientation organique ; et

(ii) maintien dudit mélange réactionnel sous des conditions de cristallisation jusqu'à ce que se forment des cristaux dudit matériau tel qu'obtenu par synthèse.

9. Un procédé selon la revendication 8, dans lequel ledit agent d'orientation organique est choisi parmi les imines hétérocycliques, cycloalkyl-amines et ions adamantane ammonium quaternaire.

10. Un procédé selon la revendication 8 dans lequel ledit agent d'orientation organique est choisi parmi hexaméthylèneimine, 1,4-diazacycloheptane, azacyclooctane, aminocyclohexane, aminocycloheptane, aminocyclopentane, des ions N,N,N-triméthyl-1-adamantananammonium et ions N,N,N-triméthyl-2-adamantanammonium.

11. Un oxyde stratifié selon la revendication 1, qui, après calcination dans l'air pendant 6 heures a 540°C, présente le spectre suivante de diffraction aux rayons-X :

| $d(\mathring{A})$ [1 nm = 10$\mathring{A}$] | $I/I_o$ |
|---|---|
| >32,2 | vs |
| 12,38 ± 0,25 | w-m |
| 3,42 ± 0,07 | w-m |

12. Un oxyde stratifié selon la revendication 11, dans lequel ledit spectre de diffraction aux rayons-X comprend des raies supplémentaires avec une distance d(A) inférieure à la raie à 12,38 ± 0,25 mais aucune desdites raies supplémentaires ne présente une intensité supérieure à celle de la raie à la distance d(A) 12,38 ± 0,25 ou 3,42 ± 0,07, selon celle qui présente l'intensité la plus élevée.

13. Un oxyde stratifié selon la revendication 11, dans lequel ledit spectre de diffraction aux rayons-X comprend les raies suivantes :

| $d(\mathring{A})$ [1 nm = 10$\mathring{A}$] | $I/I_o$ |
|---|---|
| >32,2 | vs |
| 12,38 ± 0,25 | w-m |
| 10,94 ± 0,22 | w-m |
| 9,01 ± 0,18 | w |
| 6,88 ± 0,14 | w |
| 6,16 ± 0,12 | w-m |
| 3,93 ± 0,08 | w-m |
| 3,55 ± 0,07 | w |
| 3,42 ± 0,07 | w-m |
| 3,33 ± 0,07 | w-m |

14. Un oxyde stratifié selon la revendication 11, qui est un oxyde stratifié étayé par des colonnes.

15. Un procédé de préparation du matériau stratifié étayé par des colonnes selon la revendication 14, ledit procédé comprenant les étapes suivantes :

(i) préparation d'un mélange réactionnel capable de former un matériau stratifié par cristallisation, ledit mélange réactionnel contenant des cations de métaux alcalins ou de métaux alcalino-terreux, une source de silice contenant au moins 30% en poids de silice solide, un oxyde d'aluminium, de l'eau et de l'hexaméthylèneimine;

(ii) maintien dudit mélange réactionnel dans les conditions de cristallisation jusqu'à ce qu'il se forme des cristaux de matériau stratifié;

(iii) gonflement dudit matériau stratifié de l'étape (ii) par mise en contact dudit matériau stratifié avec un agent gonflant; et

(iv) mise du matériau gonflé de l'étape (iii) au contact d'un agent de formation de colonnes.

16. Un procédé selon la revendication 15, dans lequel ledit mélange réactionnel présente en termes de rapport molaire une composition entrant dans les fourchettes suivantes :

| | |
|---|---|
| $SiO_2/Al_2O_3$ | = 10 à 80 |
| $H_2O/SiO_2$ | = 5 à 100 |
| $OH^-/SiO_2$ | = 0,01 à 1.0 |
| $M/SiO_2$ | = 0,01 à 2,0 |
| $R/SiO_2$ | = 0.05 à 1,0 |

R représentant l'hexaméthylèneimine et M représentant un métal alcalin ou un métal alcalino-terreux.

17. Un procédé selon la revendication 15, dans lequel ledit matériau stratifié de l'étape (ii) présente le spectre de diffraction aux rayons-X comprenant les raies suivantes:

| d($\text{Å}$) [1 nm = 10$\text{Å}$] | I/I$_o$ |
|---|---|
| 13,53 ± 0,2 | m-vs |
| 12,38 ± 0,2 | m-vs |
| 11,13 ± 0,2 | w-s |
| 9,15 ± 0,15 | w-s |
| 6,89 ± 0,15 | w-m |
| 4,47 ± 0,10 | w-m |
| 3,95 ± 0,08 | w-vs |
| 3,56 ± 0,06 | w-m |
| 3,43 ± 0,06 | m-vs |
| 3,36 ± 0,05 | w-s |

dans lesquels le matériau gonflé de l'étape (iii) présentent le spectre de diffraction aux rayons-X comprenant les raies suivantes :

| d(Å) [1 nm = 10Å] | $I/I_o$ |
|---|---|
| >32,2 | vs |
| 12.41 ± 0,25 | w-s |
| 3,44 ± 0,07 | w-s |

et dans lequel ledit agent gonflant comprend un cation cétyltriméthylammonium

18. Un procédé selon la revendication 15, dans lequel l'étape de gonflement (iii) est conduite dans un intervalle de pH de 11 à 14.

19. Un procédé selon la revendication 16, dans lequel l'étape de gonflement (iii) est conduite dans un intervalle de pH de 12,5 à 13,5.

FIG. 1

FIG. 2

FIG. 3

FIG. 4